# EUROPEAN PATENT SPECIFICATION

(11) **EP 1 420 527 B1**
(45) Date of publication and mention of the grant of the patent: **11.01.2006**
(21) Application number: 02360315.2
(22) Date of filing: 15.11.2002
(51) Int. Cl.: H04B 10/158

(54) **Digital signal processing receiver and method for its operation**
Digitaler Signalverarbeitungsempfänger und Verfahren zu seinem Betrieb
Récepteur de traitement de signal digital et sa méthode d'opération

(43) Date of publication of application: 19.05.2004
(73) Proprietor: ALCATEL, 75008 Paris (FR)
(72) Inventor: Bülow, Henning, 70806 Kornwestheim (DE)
(74) Representative: Rausch, Gabriele

(56) References cited:
- US-B1- 6 347 169
- PASTOR D ET AL: "EXPERIMENTAL DEMONSTRATION OF PARALLEL FIBER-OPTIC-BASES RF FILTERING USING WDM TECHNIQUES" IEEE PHOTONICS TECHNOLOGY LETTERS, IEEE INC. NEW YORK, US, vol. 12, no. 1, January 2000 (2000-01), pages 77-78, XP000912620 ISSN: 1041-1135

## Description

The invention relates to a digital signal processing (=DSP) receiver for analyzing an optical signal carrying digital information, in particular in a terabit optical network, comprising a receiver input for receiving the optical signal, a photo diode, an analog-to-digital conversion (=ADC) unit, and a DSP processing unit, wherein the DSP receiver comprises a splitting unit splitting the optical signal received by the receiver input and feeding the split parts into at least two waveguide branches, wherein at least one waveguide branch comprises an optical filtering element, wherein each waveguide branch is fed onto a separate photo diode, wherein the signal of each photo diode is fed into a separate ADC unit, and wherein the signal of each ADC unit is fed into the DSP processing unit.

DSP receivers of this kind are currently used in optical networks such as 2,5 Gb/s-SDH (synchronous digital hierarchy) and Gigabit-Ethemet, described e.g. in Andrew S. Tanenbaum: Computer Networks, Verlag Prentice Hall.

For transporting information, in particular digital information, in large amounts and over long distances, optical information networks can be applied. The information to be transported is modulated onto optical signals such as light waves, and the modulated light waves are sent through an optical waveguide. The length of such a waveguide may be on the order of tens or even hundreds of kilometers. In order to recover the transported information, the optical signal is fed into a photo diode, and the electrical signal generated by the photo diode is fed into an analog-to-digital conversion unit. This conversion unit generates a converted digital signal, which is the basis for recovering the transported information in a digital signal processing circuit.

However, the photo diode is only able to determine the intensity of the incoming optical signal. Intensity, however, is only one of the characteristic properties of the optical signal. Information about the phase position, the polarization or the frequency spectrum (e.g. as a result of chromatic dispersion) is lost. This leads to poor bit error rates (BER) when recovering the transported information from the optical signal, in particular if the bit rate is high and/or the overall optical intensity during detection is low.

In mobile radio systems, signal receivers are equipped with so called antenna arrays, i.e. a multitude of detection devices (comprising an antenna and possibly a radio receiver each) in order to boost the signal intensity to noise ratio (SINR), see J.S. Thompson et al, IEEE Personal Communications, October 1996, pages 16-25. Each antenna detects the same incoming electromagnetic signal, which arrives at each antenna with a different echo distortion. A digital signal processing circuit analyzes all the signals detected by the different antennas, and based on this broader information basis, calculates an output signal containing the information of the incoming signal with a much better quality, i.e. data integrity than it would be possible with just one detection device. This calculation is done by extended algorithms, which maximizes the a-posteriori probability of the recovered data (MAP algorithm) such as the Viterbi algorithm.

US 6,347,169 (Kang et al.) discloses an apparatus for monitoring the channels of a WDM signal in a WDM system. An input optical signal is fed into an arrayed waveguide grating, which in turn provides a set of output signals, with each output signal containing a specific frequency range of the input signal. A part of the output signals is subjected to a bandpass filtering. All output signals are fed into a photo diode each, and the photo diode signals are subjected to an analog to digital conversion. The digital signals are fed into a microprocessor which provides information about the separate channels of the input optical signal.

It is the object of the invention to present a digital signal processing receiver for analyzing optical signals, which allows an information recovery with improved data integrity.

This object is achieved by a DSP receiver as introduced above, characterized in that the DSP processing unit is designed such that it correlates the information of all waveguide branches to determine either a most likely transmitted bit pattern of the optical signal, or numbers for the probability of 0 and 1 of the transmitted bit pattern of the optical signal.

The optical filtering element in a waveguide branch imprints a particular piece of information about the optical signal onto the respective split part of the optical signal. This respective split part of the optical signal and its imprinted piece of information, respectively, are fed through a separate photo diode and a separate ADC unit and into the DSP processing unit. Thus, the DSP processing unit has the opportunity to analyze at least two split parts of the optical signal simultaneously. Each split part of the optical signal may carry different information, depending on the optical filtering element in the respective waveguide branch. Typically, one split part of the optical signal will be used to provide the overall intensity information (i.e. in this waveguide branch, no optical filtering element is used), and the other split parts of the optical signal will be used to provide intensity information about a fraction of the optical signal with a particular polarization, frequency range (e.g. to learn about chromatic dispersion), or phase position, etc..

Thus, the separate waveguide branches and optical filtering elements recover part of the information, e.g. phase or polarization information, of the optical signal which would be lost if the signal detection was performed with just one photo diode. In general, the more information about the optical signal is provided to the DSP processing unit, the more reliable can be the recovery of the information originally modulated onto the optical signal.

In a preferred embodiment of the inventive DSP receiver, each waveguide branch comprises a different optical filtering element. In this case, each waveguide branch recovers a different piece of information about the optical signal. However, identical optical filtering elements in different waveguide branches may help to increase the signal-to-noise ratio of the filtered split signals carrying a type of information of particular interest, what is also an option in accordance with the invention.

In another preferred embodiment of the invention, the optical filtering element(s) comprise chromatic dispersion elements and/or polarization filters and/or spectral filters. It is particularly preferred that the DSP receiver comprises two waveguide branches with perpendicularly oriented polarization filters. This allows a recovery of the polarization information. It is also preferred that the DSP receiver comprises a set of waveguide branches with spectral filters of various average transmission wavelengths, in particular with monotonously increasing or decreasing average transmission wavelengths, preferably with evenly separated average transmission wavelengths. This allows a simple recognition of chromatic dispersion of the optical signal. Other possible filtering elements are chromatic dispersion compensation filters. Of course, different types of filtering elements may be combined in series in one waveguide branch, e.g. by disposing a chromatic dispersion compensation element behind a polarization filter.

An advantageous embodiment of the invention is characterized in that the DSP processing unit comprises an application specific integrated circuit (=ASIC) and/or a field programmable gate array (=FPGA) circuit. An ASIC is a compact standard solution tool for a DSP processing unit. The use of FPGA circuits is very cost efficient.

In another advantageous embodiment of the inventive DSP receiver, an additional optical filtering element is arranged between the receiver input and the splitting unit. The additional optical filtering element then affects the incoming optical signal as a whole. Thus, known distortions of the signal can be compensated for easily.

The inventive idea is also represented by an inventive method for recovering an optical signal with a DSP receiver as described above, characterized by the following steps:
a) the optical signal is split into at least two branches;
b) at least one split optical signal undergoes a filtering procedure;
c) the split optical signals are detected and converted into split digital signals;
d) the split digital signals are analyzed in order to recover information of the optical signal, wherein the information of all waveguide branches is correlated to determine either a most likely transmitted bit pattern of the optical signal, or numbers for the probability of 0 and 1 of the transmitted bit pattern of the optical signal.

The original optical signal is modulated with the information to be transported in the optical network. In order to recover the modulated optical signal in the DSP receiver, i.e. the information carried by the optical signal, the inventive method is applied. If the optical signal was fed directly into one single photo diode, only the integral intensity of the optical signal as a function of time could be determined, while most of the information about the optical signal would be lost. In the inventive method, in contrast, the signal is split into a multitude of branches. Each branch may undergo a different filtering procedure. Optionally, one of the branches can do without a filtering in order to access information about the overall intensity. Then, each branch provides one piece of information about the optical signal, for example the fraction of intensity polarized in a particular direction (polarization filter) or contained in a particular wavelength interval (spectral filter). After detection e.g. in a photo diode and analog to digital conversion, the split digital signals may be analyzed in order to recover the original modulated optical signal (i.e. the modulated optical signal directly after the modulation) or to recover directly the information modulated onto the optical signal. The access to numerous pieces of information about the received optical signal (i.e. the optical signal fed into the DSP receiver) increases the achievable data integrity of the recovered information. This improved performance can be used to increase the data density (i.e. the bit rate) that can be handled in an optical network. For this reason, the inventive DSP processing unit and its operation method are suitable for application in optical networks with wavelength channel rates of 2.5, 10 and 40 Gb/s .

The information of the optical signal may be a recovered electrical data signal modulated onto the optical signal. This is the standard case of information modulated onto the optical signal.

The information of the optical signal may also be likelihood numbers for the probability of 0 and 1 bits carried by the optical signal. Likelihood numbers may facilitate error correction algorithms, since badly transmitted pieces of data are easier to recognize.

A variant of the inventive method is characterized in that the analysis of the split optical signals uses a MAP maximizing algorithm. This algorithm has been tried for mobile radio systems already and is a reliable option for generating likelihood numbers.

The invention is also realized in a software program for performing the method described above when run on a computer.

Further advantages can be extracted from the description and the enclosed drawing. The features mentioned above and below can be used in accordance with the invention either individually or collectively in any combination. The embodiments mentioned are not to be understood as exhaustive enumeration but rather have exemplary character for the description of the invention.

The invention is described in the drawings.
- Fig. 1: shows an embodiment of an inventive DSP receiver with two waveguide branches and one optical filtering element in each waveguide branch;
- Fig. 2: shows another embodiment of an inventive DSP receiver with two waveguide branches and two optical filtering elements in series in each waveguide branch;
- Fig. 3: shows a further embodiment of an inventive DSP receiver with two waveguide branches, with an additional optical filtering element at the receiver input.

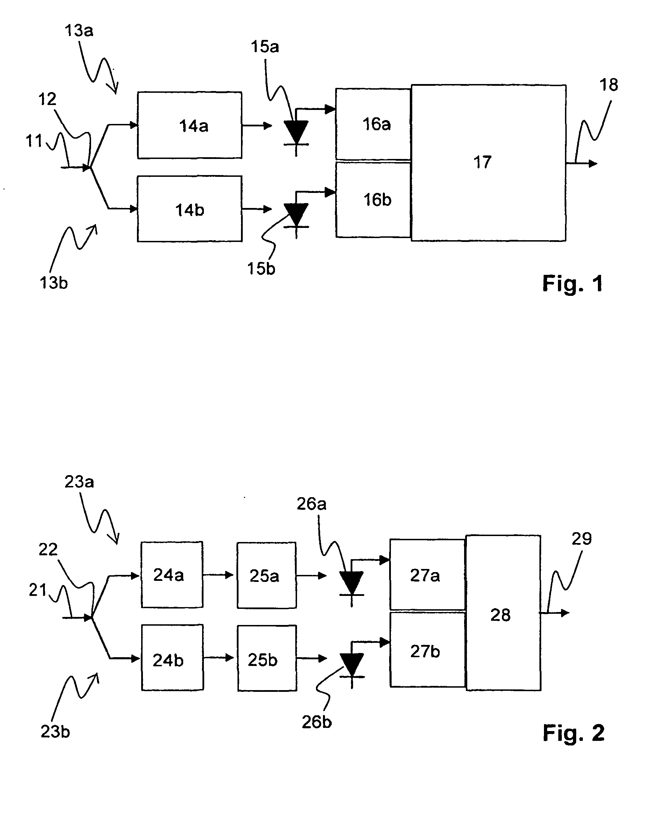

**Fig. 1** shows a first basic embodiment of the inventive DSP receiver. An optical signal arrives at the receiver input 11 and is split into two split parts in a splitting unit 12. The upper split part is fed into an upper, first waveguide branch 13a, whereas the other split signal is fed into a lower, second waveguide branch 13b. Both waveguide branches 13a, 13b lead the split optical signals into separate optical filtering elements 14a and 14b.

The optical filtering elements 14a and 14b have different filtering functions. Most easily, the two optical filtering elements are polarization filters with orthogonal orientation, or two spectral filters with different transmission intervals. Another possibility is that one filtering element is an "empty box", i.e. only one of the branches contains an optical filtering element, whereas the "empty branch" is used to analyze the overall intensity of the incoming optical signal.

After the filtering procedure, the split parts of the optical signal contain special pieces of information about the optical signal, corresponding to the respective optical filtering elements 14a, 14b. The waveguide branches 13a, 13b are then fed onto photo diodes 15a, 15b in order to convert the split parts of the optical signal into electrical signals. Apart from photodiodes 15a, 15b, this conversion may also be done by photo resistors, light dependent resistors or other opto-electric converters of sufficient processing speed. The two electrical signals generated by the photo diodes 15a, 15b are then fed into analog to digital conversion units 16a, 16b each, which in turn give their digital signals to a DSP processing unit 17. The DSP processing unit 17 analyzes the digital signals originating from all waveguide branches 13a, 13b simultaneously and recovers information about the optical signal as arrived at the receiver input 11. The DSP processing unit 17 gives this recovered information to a receiver output 18.

Typically, it is not intended to reconstruct the optical signal as arrived at the receiver input 11 itself, but to recover the data net load transported by this optical signal. The data net load is typically digital information that was modulated onto the optical signal.

As a first option, the DSP processing unit 17 may use the information of all waveguide branches 13a, 13b to correlate out the most likely transmitted bit pattern and give it to the receiver output 18. In particular, error sources like chromatic dispersion can be recognized and compensated for in order to obtain high data integrity.

As a second option, the DSP processing unit 17 may perform a maximum likelihood sequence estimation, commonly known as "soft decision". A possible and preferred calculation algorithm for this purpose is the MAP maximizing algorithm. With a "soft output" giving only numbers for the probability of 0 and 1, further improvement, in accordance with the invention, may be achieved by adding a "soft" FEC (forward error correction) decoder to the receiver output 18.

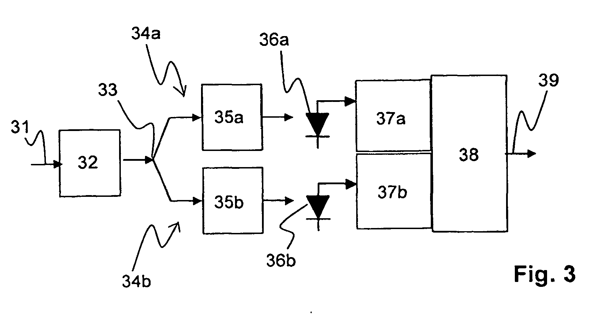

**Fig. 2** shows a second embodiment of an inventive DSP receiver. The optical signal arriving at the receiver input 21 is split at the splitting unit 22 into two split parts, which are fed into a first, upper waveguide branch 23a and a lower, second waveguide branch 23b, respectively. The upper split part of the optical signal is lead through two optical filtering elements 24a and 25a arranged in series, whereas the lower split part is lead through two other optical filtering elements 24b and 25b. Typically, these filtering elements 24a, 24b, 25a, 25b have different filtering functions each. Each waveguide branch 23a, 23b then runs into a separate photo diode 26a, 26b, and their electrical signals generated are fed into ADC units 27a and 27b. The digital signals of the ADC units 27a, 27b are received by the DSP processing unit 28 and analyzed as described for Fig. 1. The DSP processing unit 28 generates an output signal carrying information about the optical signal as received at the receiver input 21, and the output signal is fed into the receiver output 29.

**Fig. 3** shows a further, alternative embodiment of an inventive DSP receiver. After the receiver input 31, a common additional filtering element 32 is arranged to filter the incoming optical signal as a whole. Preferably, this additional filtering element 32 constitutes a chromatic dispersion compensation element or any other filtering element to compensate for known distortions of the optical signal. The filtered optical signal is then split at a splitting unit 33 into two split parts propagating in two waveguide branches 34a and 34b. Each waveguide branch 34a, 34b then comprises a filtering element 35a, 35b, a photo diode 36a, 36b and a ADC unit 37a, 37b. The digital signals of the ADC units 37a, 37b are fed into a DSP processing unit 38. The output signal of the DSP processing unit 38 is fed into a receiver output 39.

In principle, the embodiment of Fig. 3 can be regarded as an embodiment according to Fig. 1 with an additional optical filtering element 32 arranged before the splitting unit 33. Moreover, its function is equivalent to an embodiment according to Fig. 2 with identical optical filtering elements 24a, 24b corresponding to the additional optical filtering element 32. The embodiment of Fig. 3, however, can do with a total of only 3 optical filtering elements 32, 35a and 35b and is therefore less expensive and more compact.

## Claims

1. Digital signal processing DSP receiver for analyzing an optical signal carrying digital information, in particular in a terabit optical network,
comprising a receiver input (11; 21; 31) for receiving the optical signal, a photo diode (15a, 15b; 26a, 26b; 36a, 36b), an analog-to-digital conversion ADC unit (16a, 16b; 27a, 27b; 37a, 37b), and a DSP processing unit (17; 28; 38),
wherein the DSP receiver comprises a splitting unit (12; 22; 33) splitting the optical signal received by the receiver input (11; 21; 31) and feeding the split parts into at least two waveguide branches (13a, 13b; 23a, 23b; 34a, 34b),
wherein at least one waveguide branch (13a, 13b; 23a, 23b; 34a, 34b) comprises an optical filtering element (14a, 14b; 24a, 24b, 25a, 25b; 35a, 35b),
wherein each waveguide branch (13a, 13b; 23a, 23b; 34a, 34b) is fed onto a separate photo diode (15a, 15b; 26a, 26b; 36a, 36b),
wherein the signal of each photo diode (15a, 15b; 26a, 26b; 36a, 36b) is fed into a separate ADC unit (16a, 16b; 27a, 27b; 37a, 37b),
and wherein the signal of each ADC unit (16a, 16b; 27a, 27b; 37a, 37b) is fed into the DSP processing unit (17; 28; 38),
**characterized in that**
the DSP processing unit (17; 28; 38) is designed such that it correlates the information of all waveguide branches (13a, 13b; 23a, 23b; 34a, 34b) to determine either a most likely transmitted bit pattern of the optical signal, or numbers for the probability of 0 and 1 of the
transmitted bit pattern of the optical signal.

2. DSP receiver according to claim 1, **characterized in that** each waveguide branch (13a, 13b; 23a, 23b; 34a, 34b) comprises a different optical filtering element (14a, 14b; 24a, 24b, 25a, 25b; 35a, 35b).

3. DSP receiver according to claim 1, **characterized in that** the optical filtering element(s) (14a, 14b; 24a, 24b, 25a, 25b; 35a, 35b) comprise chromatic dispersion elements and/or polarization filters and/or spectral filters.

4. DSP receiver according to claim 1, **characterized in that** the DSP processing unit (17; 28; 38) comprises an application specific integrated circuit ASIC and/or a field programmable gate array FPGA circuit.

5. DSP receiver according to claim 1, **characterized in that** an additional optical filtering element (32) is arranged between the receiver input (11; 21; 31) and the splitting unit (12; 22; 33).

6. Method for recovering an optical signal with a DSP receiver according to claim 1,
comprising the following steps:
a) the optical signal is split into at least two branches;
b) at least one split optical signal undergoes a filtering procedure;
c) the split optical signals are detected and converted into split digital signals;
d) the split digital signals are analyzed in order to recover information of the optical signal, **characterized in that** the information of all waveguide branches (13a, 13b; 23a, 23b; 34a, 34b) is correlated to determine either a most likely transmitted bit pattern of the optical signal, or numbers for the probability of 0 and 1 of the transmitted bit pattern of the optical signal.

7. Method according to claim 6, **characterized in that** the analysis of the split optical signals uses a MAP maximum a-posteriori probability algorithm.

8. Software program for performing the method according to claim 6 when run on a computer.

## Patentansprüche

1. Digitaler Signalverarbeitungs-(DSP)-Empfänger zur Analyse eines optischen Signals, das digitale Information überträgt, insbesondere in einem optischen Terabit-Netzwerk,
der einen Empfänger-Eingang (11; 21; 31) zum Empfang des optischen Signals, eine Photodiode (15a, 15b; 26a, 26b; 36a, 36b), eine Analvg-/Digital-Wandler-(ADC)-Einheit (16a, 16b; 27a, 27b; 37a, 37b) und eine DSP-Verarbeitungseinheit (17; 28; 38) enthält,
wobei der DSP-Empfänger eine Aufteilungs-Einheit (12; 22; 33) enthält, die das vom Empfänger-Eingang (11; 21; 31) empfangene optische Signal aufteilt und die aufgeteilten Teile in mindestens zwei Wellenleiter-Zweige (13a, 13b; 23a, 23b; 34a, 34b) einspeist,
wobei mindestens ein Wellenleiter-Zweig (13a, 13b; 23a, 23b; 34a, 34b) ein optisches Filterelement (14a, 14b; 24a, 24b, 25a, 25b; 35a, 35b) enthält,
wobei jeder Wellenleiter-Zweig (13a, 13b; 23a, 23b; 34a, 34b) auf eine getrennte Photodiode (15a, 15b; 26a, 26b; 36a, 36b) geleitet wird,
wobei das Signal jeder Photodiode (15a, 15b; 26a, 26b; 36a, 36b) an eine getrennte ADC-Einheit (16a, 16b; 27a, 27b; 37a, 37b) angelegt wird
und worin das Signal jeder ADC-Einheit (16a, 16b; 27a, 27b; 37a, 37b) in die DSP-Verarbeitungseinheit (17; 28; 38) eingespeist wird,
**dadurch gekennzeichnet, dass**
die DSP-Verarbeitungseinheit (17; 28; 38) so konstruiert ist, dass sie die Informationen aller Wellenleiter-Zweige (13a, 13b; 23a, 23b; 34a, 34b) korreliert, um entweder ein am wahrscheinlichsten übertragenes Bitmuster des optischen Signals oder Werte für die Wahrscheinlichkeit von 0 und 1 des übertragenen Bitmusters des optischen Signals zu bestimmen.

2. DSP-Empfänger gemäß Anspruch 1, **dadurch gekennzeichnet, dass** in jedem Wellenleiter-Zweig (13a, 13b; 23a, 23b; 34a, 34b) ein unterschiedliches optisches Filterelement (14a, 14b; 24a, 24b, 25a, 25b; 35a, 35b) enthalten ist.

3. DSP-Empfänger gemäß Anspruch 1, **dadurch gekennzeichnet, dass** das/die optische(n) Filterelement(e) (14a, 14b; 24a, 24b, 25a, 25b; 35a, 35b) chromatische Dispersions-Elemente und/oder Polarisationsfilter und/oder Spektralfilter enthalten.

4. DSP-Empfänger gemäß Anspruch 1, **dadurch gekennzeichnet, dass** die DSP-Verarbeitungseinheit (17; 28; 38) einen anwendungsspezifischen integrierten Schaltkreis ASIC und/oder ein Field Programmable Gate Array FPGA enthält.

5. DSP-Empfänger gemäß Anspruch 1, **dadurch gekennzeichnet, dass** ein zusätzliches Filterelement (32) zwischen dem Empfänger-Eingang (11; 21; 31) und der Aufteilungs-Einheit (12; 22; 33) angeordnet ist.

6. Verfahren zur wiedergewinnung eines optischen Signals, mit einem DSP-Empfänger gemäß Anspruch 1, das folgende Schritte umfasst:
a) Das optische Signal wird in mindestens zwei Zweige aufgeteilt;
b) Mindestens ein aufgeteiltes optisches Signal wird einer Filterungs-Prozedur unterzogen;
c) Die aufgeteilten optischen Signale werden erkannt und in aufgeteilte Digitalsignale umgewandelt;
d) Die aufgeteilten Digitalsignale werden analysiert, um Information des optischen Signals wiederzugewinnen, **dadurch gekennzeichnet, dass** die Information aller Wellenleiter-Zweige (13a, 13b; 23a, 23b; 34a, 34b) korreliert werden, um entweder ein am wahrscheinlichsten übertragenes Bitmuster des optischen Signals oder Werte für die Wahrscheinlichkeit von 0 und 1 des übertragenen Bitmusters des optischen Signals zu bestimmen.

7. Verfahren gemäß Anspruch 6, **dadurch gekennzeichnet, dass** für die Analyse der aufgeteilten optischen Signale ein MAP-Algorithmus für die maximale a-posteriori-Wahrscheinlichkeit verwendet wird.

8. Software-Programm zur Durchführung des Verfahrens gemäß Anspruch 6, wenn es auf einem Computer ausgeführt wird.

## Revendications

1. Récepteur de traitement numérique du signal DSP pour analyser un signal optique acheminant des informations numériques, en particulier dans un réseau optique térabit,
comprenant une entrée de récepteur (11 ; 21 ; 31) pour recevoir le signal optique, une photodiode (15a, 15b ; 26a, 26b ; 36a, 36b), une unité de conversion analogique-numérique ADC (16a, 16b ; 27a, 27b ; 37a, 37b), et une unité de traitement DSP (17 ; 28 ; 38),
dans lequel le récepteur DSP comprend une unité de division (12 ; 22 ; 33) divisant le signal optique reçu par l'entrée du récepteur (11 ; 21 ; 31) et alimentant les parties divisées dans au moins deux branches de guide d'ondes (13a, 13b ; 23a, 23b ; 34a, 34b),
dans lequel au moins une branche de guide d'ondes (13a, 13b ; 23a, 23b ; 34a, 34b) comprend un élément de filtrage optique (14a, 14b ; 24a, 24b, 25a, 25b ; 35a, 35b), dans lequel chaque branche de guide d'ondes (13a, 13b ; 23a, 23b; 34a, 34b) est alimentée sur une photodiode séparée (15a, 15b ; 26a, 26b ; 36a, 36b),
dans lequel le signal de chaque photodiode (15a, 15b ; 26a, 26b ; 36a, 36b) est alimenté dans une unité ADC séparée (16a, 16b ; 27a, 27b ; 37a, 37b),
et dans lequel le signal de chaque unité ADC (16a, 16b; 27a, 27b; 37a, 37b) est alimenté dans l'unité de traitement DSP (17 ; 28 ; 38),
**caractérisé en ce que**
l'unité de traitement DSP (17 ; 28 ; 38) est conçue de sorte qu'elle corrèle les informations de toutes les branches de guide d'ondes (13a, 13b ; 23a, 23b ; 34a, 34b) pour déterminer soit une configuration binaire très probablement transmise du signal optique, soit des nombres pour la probabilité de 0 et 1 de la configuration binaire transmise du signal optique.

2. Récepteur DSP selon la revendication 1, **caractérisé en ce que** chaque branche de guide d'ondes (13a, 13b; 23a, 23b; 34a, 34b) comprend un élément de filtrage optique différent (14a, 14b ; 24a, 24b, 25a, 25b ; 35a, 35b).

3. Récepteur DSP selon la revendication 1, **caractérisé en ce que** le(s) éléments(s) de filtrage optique(s) (14a, 14b ; 24a, 24b, 25a, 25b ; 35a, 35b) comprend(comprennent) des éléments de dispersion chromatique et/ou des filtres de polarisation et/ou des filtres spectraux.

4. Récepteur DSP selon la revendication 1, **caractérisé en ce que** l'unité de traitement DSP (17 ; 28 ; 38) comprend un circuit intégré à application spécifique ASIC et/ou un circuit de réseau prédiffusé programmable par l'utilisateur FPGA.

5. Récepteur DSP selon la revendication 1, **caractérisé en ce qu'**un élément de filtrage optique supplémentaire (32) est disposé entre l'entrée du récepteur (11 ; 21 ; 31) et l'unité de division (12 ; 22 ; 33).

6. Procédé pour reconstituer un signal optique avec un récepteur DSP selon la revendication 1, comprenant les étapes suivantes :
a) le signal optique est divisé en au moins deux branches ;
b) au moins un signal optique divisé subit une procédure de filtrage ;
c) les signaux optiques divisés sont détectés et convertis en signaux numériques divisés ;
d) les signaux numériques divisés sont analysés afin de reconstituer les informations du signal optique, **caractérisé en ce que** les informations de toutes les branches de guide d'ondes (13a, 13b ; 23a, 23b ; 34a, 34b) sont corrélées pour déterminer soit une configuration binaire très probablement transmise du signal optique, soit des nombres pour la probabilité de 0 et 1 de la configuration binaire transmise du signal optique.

7. Procédé selon la revendication 6, **caractérisé en ce que** l'analyse des signaux optiques divisés utilise un algorithme de probabilité a posteriori maximum MAP.

8. Progamme logiciel pour effectuer le procédé selon la revendication 6 lorsque exécuté sur un ordinateur.
